# EUROPEAN PATENT APPLICATION

(11) **EP 0 942 412 A1**
(43) Date of publication of application: **15.09.1999**
(21) Application number: 98830140.4
(22) Date of filing: 13.03.1998
(51) Int. Cl.: G11B 5/48, G11B 5/60, G11B 21/16, G11B 25/00

(54) **Suspension arm with a hollow structure for a head of a disk storage device**

(71) Applicant: STMicroelectronics S.r.l., 20041 Agrate Brianza (Milano) (IT)
(72) Inventor: Murari, Bruno, 20052 Monza, (Milano) (IT); Vigna, Benedetto, 85100 Potenza (IT); Ferrari, Paolo, 21013 Gallarate, (Varese) (IT)
(74) Representative: Pezzoli, Ennio

(57) **Abstract**

In a suspension arm (125) for at least one head (120) of a disk storage device, in which the suspension arm (125) terminates in a flexible suspension element (127) for urging the at least one head (120) towards the disk (105), the suspension element (127) has a hollow structure.

## Description

The present invention relates to a suspension arm for a head of a disk storage device and, in particular, to a suspension arm according to the preamble of the first claim.

In disk storage devices, the data is stored on tracks concentric with an axis of rotation of the disk. To access a block of data (for reading or writing) a reading and writing head mounted on a suspension arm is positioned in the region of the desired track.

The arm terminates in a flexible suspension element, to a free end of which the reading and writing head is fixed; the suspension element bends in order to exert a pressure which urges the head against the disk. The suspension element is usually constituted by a plate substantially parallel to the disk; the plate has a very small thickness of the order of a few tens of µm so as to be easily deformable perpendicularly to the disk.

A disadvantage of this solution is that the structure thus formed makes the suspension arm excessively weak.

The deformability of the suspension arm introduces both lateral and torsional oscillations (rolling) which do not allow the reading and writing head to be positioned precisely and kept in the desired position. This reduces resolution in the positioning of the suspension arm and hence the density of data which can be stored on the disk.

The deformability of the suspension arm also limits the speed with which the suspension arm can respond to a positioning request, slowing the operation of the storage device as a whole. For example, a minimum waiting time is required in order to damp the oscillations induced in the suspension arm; moreover, the movement of the suspension arm has to be sufficiently gradual to prevent mechanical resonance phenomena.

The deformability of the suspension arm also introduces oscillations perpendicular to the disc (pitching) which render the distance of the head from the disk changeable, reducing the efficiency of the reading and writing process. Moreover, this increases the risk of accidental contacts between the head and the disk, with consequent damage to the storage device.

The object of the present invention is to overcome the aforementioned drawbacks. To achieve this object, a suspension arm as described in the fist claim is proposed.

The suspension arm of the present invention is particularly stiff whilst retaining optimal resilience properties. In particular, the structure has a high resonance frequency; this reduces the oscillations of the suspension arm (lateral, torsional and vertical oscillations) permitting the production of faster storage devices with greater data density.

The solution according to the present invention enables the movement of the head to be controlled very accurately and the track to be followed extremely precisely.

The stiffness of the suspension arm also prevents accidental contacts with the disk, even in the presence of knocks and vibrations, for example, in portable devices.

Further characteristics and advantages of the suspension arm according to the present invention will become clear from the following description of a preferred embodiment thereof, given by way of non-limiting example, with reference to the appended drawings, in which:
Figure 1 shows schematically, in section, a hard-disk storage device in which the suspension arm of the present invention can be used,
Figure 2 is a partial view of an embodiment of the suspension arm according to the present invention.

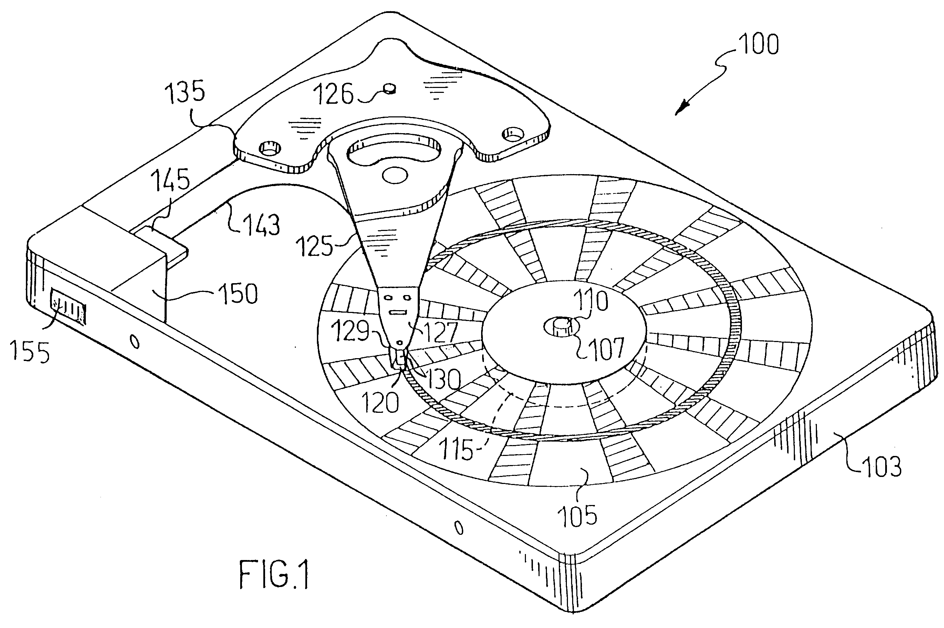

With reference in particular to Figure 1, a hard-disk storage device 100 includes a sealed container 103, inside which there is a disk 105 constituted by a rigid circular substrate (with a diameter, for example, of between 7 and 10 cm) covered by a ferromagnetic material. The disk 105 is coupled by means of a hub 107 to a shaft 110 connected to a suitable electric motor 115; the motor 115 keeps the disk 105 in rotation about the shaft 110 at a constant frequency (for example between 100 and 150 Hz).

The disk 105 is divided into tracks concentric with the rotation shaft 110, each track containing a plurality of cells each for storing one bit of data represented by different magnetization states of the ferromagnetic material; typically, the density of the data along a track is, for example, of the order of 120,000 BPI (bits per inch). Data is read from and written on the disk 105 by means of a head 120. The head 120 is generally constituted by an electromagnetic device which can detect or vary the magnetization state of a cell disposed beneath it during a reading or a writing operation, respectively.

The storage device 100 includes a suspension arm 125 coupled at one of its ends to a pin 126. The arm 125 terminates in a flexible suspension element 127 on the free end of which a slider 129, which supports the head 120, is mounted. Typically, the slider 129 is fixed to the suspension element 127 by means of a gimbal 130 which stiffens the structure with respect to rolling and pitching. The suspension element 127 bends in order to exert a pressure which urges the slider 129 against an upper surface of the disk 105. The slider 129 hovers on an air cushion above the upper surface of the disk 105 when the disk 105 is in rotation, enabling the head 120 to follow the roughness of the disk 105 at an extremely small distance, for example, of 10-30 nm.

An actuator 135, typically constituted by a voice coil motor of the type used in loud speakers, rotates the suspension arm 125 about the pin 126. The head 120 is thus moved in a substantially radial direction relative to the disk 105 so as to be positioned over the desired track.

The head 120 is connected, by means of a flexible wire 143, to an analog/digital circuit 145 formed in a chip of semiconductor material. The circuit 145 processes an electrical signal supplied by the head 120 during a reading operation and sends suitable control signals to the head 120 during a writing operation. The circuit 145 is connected to a control unit 150 which puts the storage device 100 into communication with the exterior by means of a suitable connector 155. The unit 150 is also connected to the actuator 135 in order to control the positioning of the head 120 over the desired track.

In the storage device 100 described above, the data is stored only on the upper surface of the disk 105 (a single-sided disk). Similar considerations apply if both the upper surface and a lower surface of the disk are used to store data (a double-sided disk) or if the storage device includes several disks (for example 3 or 4 disks); in this case, the heads for reading from and writing on the two faces of each disk are mounted on a battery of suspension arms fixed together. The suspension arm of the present invention may also be used with two or more heads, with a read-only head, with a write-only head, in a floppy-disk or optical-disk storage device, or the like.

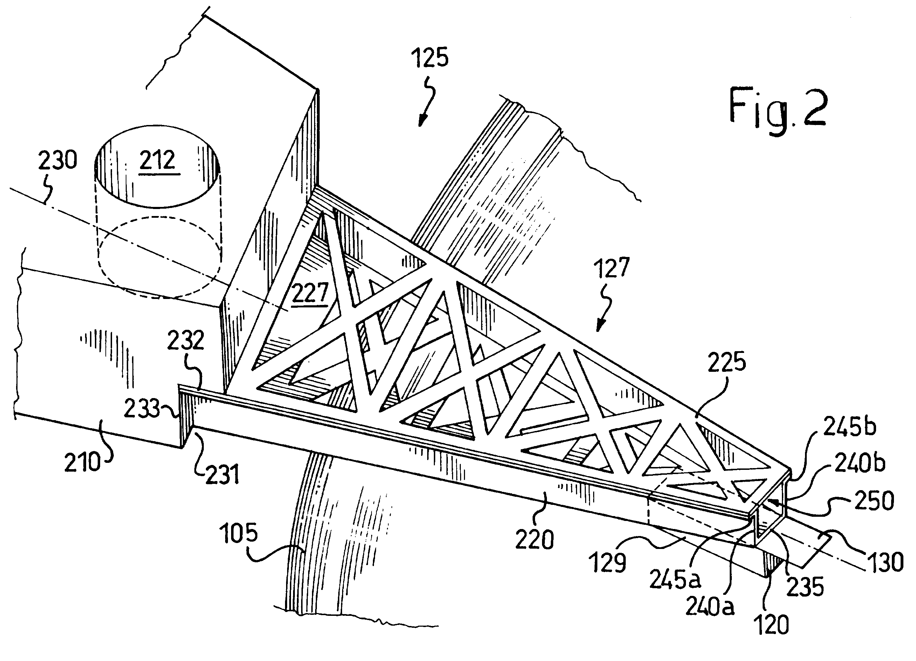

With reference now to Figure 2 (elements already shown in Figure 1 are identified by the same reference numerals), the suspension arm 125 has a substantially trapezoidal shape, for example, with a length of between 5 and 10 cm and with a width of 1 cm in the region of the pin (126 in Figure 1) and 1 mm in the region of the head 120.

The suspension arm 125 is constituted by a main, rigid portion 210 which occupies, for example, 60% of the overall length of the suspension arm 125. The rigid arm 210 has a thickness, for example, of between 1 and 2 mm and is made of materials (such as aluminium or magnesium) having a low mass density and hence a high resonance frequency; typically, one or more through-holes 212 with axes perpendicular to the disk 105 are formed in the rigid arm 210 in order to reduce the weight of the suspension arm 125.

The suspension element 127 is constituted by a channel-shaped body 220 closed at the top by a cover 225. The channel-shaped body 220 and the cover 225 are made of a material (usually steel) which has mechanical properties, particularly resilience, better than those of the material used to form the rigid arm 210.

The cover 225 is constituted by a flat plate with a thickness, for example, of a few tens of µm. The flat plate 225 is fixed (for example welded) to the rigid arm 210 in the vicinity of a free end thereof so as to be substantially parallel to the disk 105. In a particularly advantageous embodiment of the present invention, a recess 231 is formed in the vicinity of a lower free corner of the rigid arm 210 and constitutes an inverted step defined by a horizontal wall 232 and by a vertical wall 233; the recess 231 preferably has a height substantially equal to that of the suspension element 127. The flat plate 225 is fixed to the horizontal wall 232 so that the structure of the suspension element 127 does not increase the height of the arm 125 and does not therefore create any problems with regard to the packaging of any further disks.

The channel-shaped body 220 is constituted by a similar plate shaped so as to have a generally inverted Ω-shaped cross-section with a width, relative to a longitudinal axis 230, substantially equal to that of the cover 225. In particular, the channel-shaped body 220 has a central wall 235 having two longitudinal edges from each of which a side wall 240a, 240b extends perpendicularly upwards; the free longitudinal edge of each side wall 240a, 240b is bent outwardly at 90° so as to define a bearing surface 245a, 245b. The bearing surfaces 245a, 245b are fixed to a lower surface of the plate 225, for example, by means of a laser welding process, so as to define a box-like structure 250 open at its longitudinal ends.

Holes 227 (formed, for example, by blanking) are preferably provided in the channel-shaped body 220 and in the cover 225 so as to reduce the weight of the suspension element 127. Advantageously, the holes 227 are formed in the flat plate 225 and in the central wall 235 and are arranged in a manner such that the flat plate 225 and the central wall 235 have a lattice structure.

The gimbal 130, which is typically constituted by a steel plate with a thickness of a few µm, is fixed (for example welded) to a lower surface of the central wall 235 in the vicinity of a free end thereof; the slider 129 (which supports the head 120) is therefore fixed (for example glued) to a lower surface of the gimbal 130.

Conductive tracks (suitably insulated) are formed on the lower surface of the central wall 235 for the electrical connection of the head 120 to the exterior. In particular, conductive pads are arranged on a vertical surface of a plate of ceramic material in which the head 120 is formed. These conductive pads are electrically connected to the conductive tracks by means of gold balls (not shown in the drawing) arranged in the vicinity of an angle formed between the conductive pads and the conductive tracks, as described in "A New Integrated Suspension for Pico-Sliders (Pico-Caps), IEEE Transactions on Magnetics, Vol. 32, No. 5, September 1996". Similar remarks apply if the head 120 is formed in a chip of semiconductor material, with the conductive pads facing the conductive tracks, or the like.

The suspension thus formed offers an optimal compromise between stiffness and lightness, enabling a high resonance frequency and good resistance to knocks to be achieved. In particular, the suspension arm enables the head to be positioned very precisely and quickly with a resolution of the order of 0.1 µm. It is thus possible to increase the density of data on the storage device, producing disks with a track density, for example, of 25,000 TPI (tracks per inch), in contrast with known disks in which the track density is of the order of 5,000 TPI. Moreover, this structure is particularly compact and simple and can be mass-produced at low cost.

The suspension arm of the present invention may also be formed by a channel-shaped body with a different cross-section (for example, with side walls which are not perpendicular to the central wall), by a single steel plate suitably bent and closed onto itself, etc; in a different embodiment, the box-like body is closed at one or both of its longitudinal ends, has internal reinforcing ribs, and so on.

More generally, the suspension element according to the present invention has a hollow structure. This structure preferably includes one or more cavities arranged longitudinally; alternatively, the cavities are arranged transversely, or obliquely, or define a honeycomb structure, etc.

Naturally, in order to satisfy contingent and specific requirements, an expert in the art may apply to the above-described suspension arm many modifications and variations all of which, however, are included in the scope of protection of the invention as defined by the following claims.

## Claims

1. A suspension arm (125) for at least one head (120) of a disk storage device (100), the suspension arm (125) terminating in a flexible suspension element (127) for urging the at least one head (120) towards the disk (105),
characterized in that
the suspension element (127) has a hollow structure.

2. A suspension arm (125) according to Claim 1, in which the suspension element (127) includes at least one longitudinal cavity (250).

3. A suspension arm (125) according to Claim 2, in which the suspension element (127) has a box-like structure (250) open at a first and at a second longitudinal end.

4. A suspension arm (125) according to Claim 3, in which the box-like structure (250) is constituted by a channel-shaped body (225) closed by a cover (220).

5. A suspension arm (125) according to Claim 4, in which the cover (225) is constituted by a flat plate, and in which the channel-shaped body (220) is constituted by a plate shaped so as to have a central wall (235) having a first and a second longitudinal edge from which a first side wall (240a) and a second side wall (240b) extend respectively, each side wall having a free longitudinal edge which is bent outwardly to define a first bearing surface (245a) or a second bearing surface (245b), respectively, the first and second bearing surfaces (245a, 245b) being fixed to the flat plate (225).

6. A suspension arm (125) according to Claim 5, in which the suspension arm (125) includes a rigid portion (210) having a recess (231) formed in the vicinity of a free corner thereof, the flat plate (225) being fixed to the rigid portion (210) in the recess (231).

7. A suspension arm (125) according to any one of Claims 4 to 6, in which a plurality of holes (227) is formed in the channel-shaped body (224) and in the cover (220) for reducing weight.

8. A suspension arm (125) according to Claim 7, in which the flat plate (225) and the central wall (235) of the channel-shaped body (220) have a lattice structure defined by the holes (227) for reducing weight.

9. A disk-storage device (100), comprising at least one suspension arm (125) according to any one of Claims 1 to 8.

10. A disk-storage device (100) according to Claim 9, in which the storage device (100) is a magnetic hard disk.
